# EUROPÄISCHE PATENTSCHRIFT

(11) **EP 0 718 603 B1**
(45) Veröffentlichungstag und Bekanntmachung des Hinweises auf die Patenterteilung: **25.02.2004**
(21) Anmeldenummer: 95108286.6
(22) Anmeldetag: 31.05.1995
(51) Int. Cl.: G01F 1/10

(54) **Woltmannzähler**
Turbine type flowmeter
Débitmètre à turbine

(30) Priorität: 22.12.1994 DE 4445976
(43) Veröffentlichungstag der Anmeldung: 26.06.1996
(73) Patentinhaber: H. MEINECKE AG, D-30880 Laatzen (DE)
(72) Erfinder: Bremer, Henning, D-30890 Barsinghausen (DE)
(74) Vertreter: Brümmerstedt, Hans Dietrich, Dipl.-Ing.

(56) Entgegenhaltungen:
- WO-A-91/04462
- DE-A- 3 732 703
- DE-A- 3 740 531
- DE-C- 281 988
- DE-C- 841 952

## Beschreibung

Die vorliegende Erfindung betrifft einen Woltmannzähler mit einem am Deckelflansch des Zählergehäuses befestigten Meßeinsatz, welcher aus einem zwischen einer stromauf und einer stromab gelegenen Nabe drehbar angeordneten Flügelrad besteht, wobei beide Naben feststehend gehaltert sind und Lagerstellen für das Flügelrad aufweisen.

Derartige Zähler sind aus dem Stand der Technik bekannt, so z.B. aus der DE-A1 37 32 703. Diese Offenlegungsschrift betrifft einen Verbund-Wasserzähler, bei dem der Haupt-Zähler als Woltmannzähler ausgeführt ist. Der Meßeinsatz dieses Zählers besteht aus einem rohrförmigen Element, in dem das Flügelrad zwischen einer stromauf und einer stromab gelegenen Nabe drehbar gelagert ist. Jede Nabe ist mittels mehrerer radial nach außen gerichteter Stege an dem rohrförmigen Element befestigt, welches seinerseits am Deckelflansch des Zählergehäuses befestigt ist. Auf diese Weise ergibt sich ein aus dem Zählergehäuse herausnehmbarer Meßeinsatz, der dann z.B. für Eich- und Wartungszwecke zur Verfügung steht.

Nachteilig an diesem Stand der Technik ist, daß die Montage bzw. Demontage des Flügelrades sowie seiner Lager relativ aufwendig ist. Ein weiterer Nachteil resultiert aus den im Durchströmungs-Querschnitt liegenden Haltestegen der Naben. Je nach Anzahl dieser Stege entstehen zusätzliche Druckverluste, die insbesondere bei Beregnungszählern unerwünscht sind, da in diesen Leitungssystemen mit hohen Strömungsgeschwindigkeiten gearbeitet wird. Hinzu kommt, daß im Beregnungswasser mitgeführte Schmutzteile durch die Stege zusätzlich behindert werden und dadurch die Messung stören.

Aufgabe der vorliegenden Erfindung ist es, einen Woltmannzähler der gattungsgemäßen Art zur Verfügung zu stellen, dessen Meßeinsatz einen schnellen und einfachen Aus- bzw. Einbau des Flügelrades und seiner Lager gestattet, sowie möglichst geringe Druckverluste verursacht.

Erfindungsgemäß wird diese Aufgabe dadurch gelöst, daß jede Nabe an nur einem Steg gehaltert ist, wobei beide Stege in Strömungsrichtung miteinander fluchten sowie an ihrem oberen Ende in einen Flansch übergehen, der formschlüssig in eine Einschubkulisse des Deckelflansches des Zählergehäuses einschiebbar ist und diese Anordnung eine gemeinsame Teilungsebene besitzt, derart, daß zwei sich ergänzende Flansch-Steg-Naben-Hälften in dieser Teilungsebene lösbar aneinanderliegen und zum Ein- und Ausbau des Flügelrades sowie der Flügelradlager voneinander abhebbar sind.

Bei einem derartig ausgeführten Woltmannzähler gestaltet sich der Ein- und Ausbau des Flügelrades und seiner Lager sehr einfach. Beim Ausbau wird zunächst die Verschraubung des Deckelflansches mit dem Zählergehäuse gelöst und mit ihm der Meßeinsatz aus dem Gehäuse herausgehoben. Nach dem Herausschieben des Meßeinsatzes aus der Einschubkulisse sind dann nur noch die beiden Flansch-Steg-Naben-Hälften voneinander abzuheben, und das Flügelrad sowie seine Lager liegen frei. Der Einbau erfolgt in ebenso einfacher Weise in umgekehrter Reihenfolge. Diese Konstruktion des Meßeinsatzes bringt natürlich nicht nur bei Wartungsarbeiten Vorteile, sondern auch bei der Endmontage des Woltmannzählers.

Es sei an dieser Stelle erwähnt, daß der Begriff "Flansch-Steg-Naben-Hälfte" in der vorliegenden Beschreibung in funktionellem Sinne und nicht im Sinne von gleichen Teilen zu verstehen ist.

Ein weiterer Vorteil dieses Zählers ist darin zu sehen, daß die Naben nur noch an einem Steg befestigt sind. Dadurch werden die Druckverluste gegenüger herkömmlichen Woltmannzählern reduziert, was einen erfindungsgemäßen Zähler insbesondere als Beregnungszähler geeignet macht.

In weiterer Ausgestaltung der Erfindung gehen die die Naben halternden Stege, einen durchgehenden Steg bildend, an ihren oberen und unteren Enden ineinander über, wobei dieser Steg im Durchtrittsbereich des Flügelrades einen Ausschnitt aufweist. Diese Ausführung erhöht die Stabilität des Meßeinsatzes und trägt zur Beruhigung der Strömung des zu messenden Fluids bei.

Gemäß einer vorteilhaften Weiterbildung der Erfindung sind die Steg-Hälften an ihren unteren Enden mittels Steckverbindungen lösbar miteinander verbunden. Diese Steckverbindungen sorgen im Zusammenwirken mit dem in die Einschubkulisse des Deckelflansches einschiebbaren Flansch des Meßeinsatzes dafür, daß die Flansch-Steg-Naben-Hälften zwar lösbar, aber auch dicht aneinanderliegen.

Die Erfindung wird nachstehend anhand eines Ausführungsbeispiels näher erläutert. In der dazugehörigen Zeichnung zeigt:

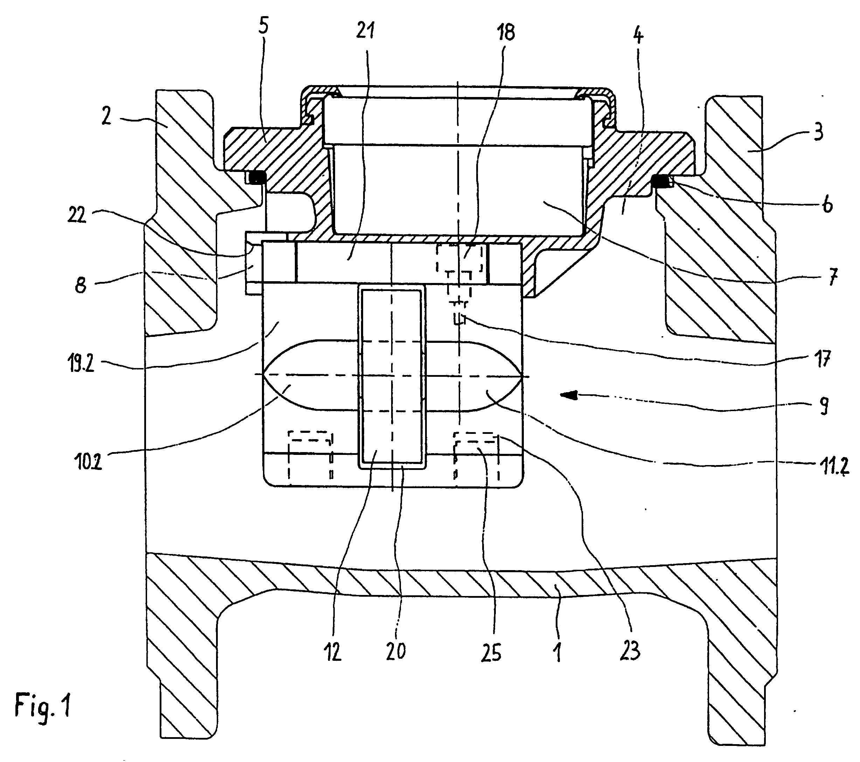

- Fig. 1: einen Längsschnitt durch einen Woltmannzähler mit ungeschnittenem Meßeinsatz,
- Fig. 2: eine Seitenansicht nach Fig. 1 unter Weglassung des Zählergehäuses,
- Fig. 3: einen Längsschnitt durch den Meßeinsatz,
- Fig. 4: einen Querschnitt durch den Meßeinsatz mit einer abgeklappten Flansch-Steg-Naben-Hälfte, und
- Fig. 5: eine Draufsicht auf den Meßeinsatz.

Das Zählergehäuse 1 besitzt einen linken und einen rechten Flansch 2, 3 zum Einbau in eine Rohrleitung. Weiterhin weist es eine obere öffnung 4 auf, die durch einen Deckelflansch 5 verschließbar ist. Die Abdichtung zwischen Deckelflansch 5 und Zählergehäuse 1. erfolgt mittels eines 0-Ringes 6. In den Deckelflansch 5 integriert ist ein Zählwerk 7. Zur Befestigung eines Meßeinsatzes 9 ist am unteren Ende des Deckelflansches 5 eine Einschubkulisse 8 mit rechteckigem Querschnitt vorgesehen.

Der Meßeinsatz 9 weist zwei Naben 10, 11 auf, in denen ein Flügelrad 12 drehbar gelagert ist. Dazu sind an den Nabenenden Ausnehmungen für Lagerbuchsen 13, 14 vorgesehen, die die Enden einer Flügelradwelle 15 aufnehmen. Die Umdrehung des Flügelrades 12 wird über ein Schneckenrad 16, eine Übertragungswelle 17 und eine Magnetkupplung 18 zum Zählwerk 7 übertragen.

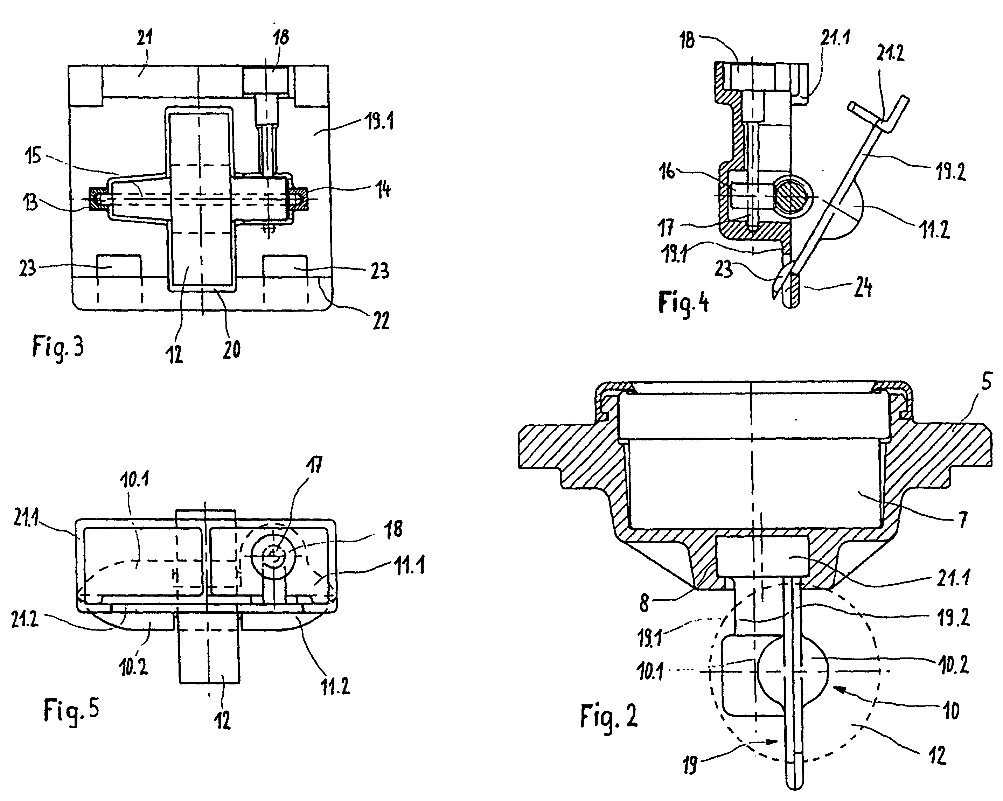

Die Halterung der Naben 10, 11 im Zählergehäuse 1 erfolgt über nur einen Steg 19, wie am besten aus Fig. 2 hervorgeht. Dieser Steg 19 erstreckt sich von den Naben 10, 11 radial nach oben und unten, und zwar in beiden Richtungen über den Durchmesser des Flügelrades 12 hinaus und in Längsrichtung über die gesamte Länge der Naben 10, 11. Im Durchtrittsbereich des Flügelrades 12 ist der Steg 19 ausgeschnitten, so daß sich das Flügelrad 12 in dem dadurch gebildeten Ausschnitt 20 mit Spiel ungehindert drehen kann.

An seinem oberen Ende geht der Steg 19 in einen Flansch 21 über, dessen Querschnitt dem der Einschubkulisse 8 entspricht, d.h. der Flansch 21 ist formschlüssig in die Einschubkulisse 8 des Deckelflansches 5 einschiebbar. Dadurch kann der Meßeinsatz 9 auf einfache Weise mit dem Deckelflansch 5 verbunden werden. Eine am vorderen Ende der Einschubkulisse 8 vorgesehene Rastnase 22 sorgt auch bei Rückwärtsströmung, z.B. infolge eines Druckschlages, für einen sicheren Halt des Meßeinsatzes 9.

Der Steg 19 ist wie auch die Naben 10, 11 und der Flansch 21 zweigeteilt, wobei die dadurch gebildeten Flansch-Steg-Naben-Hälften 21.1, 19.1, 10.1, 11.1 und 21.2, 19.2, 10.2, 11.2 jeweils einstückig ausgebildet sind.

Die Steg-Hälfte 19.1 ist an ihrem unteren Ende um 180° umgebogen. Auf der dadurch gebildeten Kante 22 stützt sich die Steg-Hälfte 19.2 im eingebauten Zustand mit ihrer Unterkante ab, was am besten aus Fig. 4 zu erkennen ist. Dabei durchgreifen zwei einstückig mit der Steg-Hälfte 19.2 ausgebildete Lappen 25, die über deren Unterkante hinausragen, in der Steg-Hälfte 19.1 vorgesehene Öffnungen 23. Diese öffnungen 23 sind durch am unteren Ende der Steg-Hälfte 19.1 beginnende, wandstärkentiefe Ausfräsungen hergestellt. Wenn die Steg-Hälfte 19.2 dicht an der Steg-Hälfte 19.1 anliegt, verschwinden die Lappen 25 völlig in den Ausfräsungen 24. Die Lappen 25 sind in Anpassung an die Form der unteren Enden der Stege 19.1 und 19.2 abgerundet.

Die Flansch-Hälfte 21.1 ist ebenso lang ausgebildet wie die Steg-Hälften 19.1, 19.2. Sie besitzt einen umlaufenden, von ihrem Boden rechtwinklig nach oben stehenden Rand, der auf der der Flansch-Hälfte 21.2 zugewandten Seite auf fast seiner gesamten Länge ausgespart ist. Diese Aussparung wird beim Anklappen der Flansch-Steg-Naben-Hälfte 21.2, 19.2, 10.2, 11.2 an die Flansch-Steg-Naben-Hälfte 21.1, 19.1, 10.1, 11.1 durch einen ebenfalls senkrecht nach oben stehenden Rand der Flansch-Hälfte 21.2 ausgefüllt. Es ist zweckmäßig, wenn die Fansch-Hälfte 21.2 bei ihrem Einklappen in die Flansch-Hälfte 21.1 mittels eines geeigneten Schnappmechanismus arretierbar ist. Dadurch wird ein ungewolltes öffnen des Meßeinsatzes 9 z.B. während der Lagerung oder eines Transports, vermieden.

Der Meßeinsatz 9 wird wie folgt montiert: Zunächst werden die Lagerbuchsen 13, 14 auf die Enden der Flügelradwelle 15 geschoben. Dann wird die komplette Übertragungswelle 16, 17, 18 und das Flügelrad 12 mit den aufgesteckten Lagerbuchsen 13, 14 in die Flansch-Steg-Naben-Hälfte 21.1, 19.1, 10.1, 11.1 eingelegt, indem die Lagerbuchsen 13, 14 in die entsprechenden Ausnehmungen der Naben-Hälften 10.1 und 11.1 eingedrückt werden. Die Naben-Hälften 10.2 und 11.2 weisen eben solche Ausnehmungen für die Lagerbuchsen 13, 14 auf.

Der Meßeinsatz 9 wird nun durch die Flansch-Steg-Naben-Hälfte 21.2, 19.2, 10.2, 11.2 komplettiert, indem die Lappen 25 durch die Öffnungen 23 gesteckt und diese Meßeinsatz-Hälfte an die andere Meßeinsatz-Hälfte angeklappt wird. Dabei rastet die Flansch-Hälfte 21.2 in die Flansch-Hälfte 21.1 ein. Der Meßeinsatz 9 kann jetzt in die Einschubkulisse 8 des Deckelflansches 5 eingeschoben werden. Der Deckelflansch 5 wird dann mit dem Meßeinsatz 9 in das Zählergehäuse 1 eingesetzt und mit diesem verschraubt. Die Demontage erfolgt in umgekehrter Reihenfolge.

## Patentansprüche

1. Woltmannzähler mit einem am Deckelflansch (5) des Zählerghäuses (1) befestigten Meßeinsatz (9), welcher aus einem zwischen einer stromauf (10) und einer stromab gelegenen Nabe (11) drehbar angeordneten Flügelrad (12) besteht, wobei beide Naben (10, 11) feststehend gehaltert sind und Lagerstellen für das Flügelrad aufweisen, **dadurch gekennzeichnet, daß** jede Nabe (10, 11) an nur einem Steg (19) gehaltert ist, wobei beide Stege (19) in Strömungsrichtung miteinander fluchten, sowie an ihrem oberen Ende in einen Flansch (21) übergehen, der formschlüssig in eine Einschubkulisse (8) des Deckelflansches (5) des Zählergehäuses (1) einschiebbar ist, und diese Anordnung eine gemeinsame Teilungsebene besitzt, derart, daß zwei sich ergänzende Flansch-Steg-Naben-Hälften (21.1, 19.1, 10.1, 11.1 und 21.2, 19.2, 10.2, 11.2) in dieser Teilungsebene lösbar aneinanderliegen und zum Ein- und Ausbau des Flügelrades (12) sowie der Flügelradlager (13, 14) voneinander abhebbar sind.

2. Woltmannzähler nach Anspruch 1, **dadurch gekennzeichnet, daß** die Stege einen aus den beiden Steg-Hälften (19.1, 19.2) zusammengesetzten, durchgehenden Steg (19) bildend, an ihren oberen und unteren Enden ineinander übergehen, und dieser Steg (19) im Durchtrittsbereich des Flügelrades (12) einen Ausschnitt (20) aufweist.

3. Woltmannzähler nach einem der vorstehenden Ansprüche, **dadurch gekennzeichnet, daß** die Steg-Hälften (19.1, 19.2) an ihren unteren Enden mittels Steckverbindungen (25, 23) lösbar miteinander verbunden sind, und die Flansch-Hälfte (21.2) in die Flansch-Hälfte (21.1) einrastbar ist.

## Claims

1. Woltmann's sail wheel with a meter unit (9) fixed to the cover flange (5) of the meter case (1) that consists of a sail wheel (12) arranged to rotate between an upstream positioned hub (10) and a downstream positioned hub (11), in which both hubs (10, 11) are held in fixed positions and are bearing points for the sail wheel, **characterised in that** each hub (10, 11) is only held on one bracket (19), such that both brackets (19) are aligned in the direction of flow and also at their upper ends merge into a flange (21), that can be inserted with positive fit into a slide-way (8) in the cover flange (5) of the meter case (1), this arrangement having a common plane of separation that two flange-brackets-hub halves (21.1, 19.1, 10.1, 11.1 and 21.2, 19.2, 10.2, 11.2) lie adjacent to each other in this plane of separation and with the capacity to be disengaged, and can be detached from one another in order to assemble and disassemble the sail wheel (12) and also the sail wheel bearings (13, 14).

2. Woltmann's sail wheel in accordance with Claim 1, **characterised in that** the brackets that form a composite, continuous bracket (19) from both the bracket halves (19.1, 19.2) merge into each other at their upper and lower ends, and this bracket (19) has a cut-out section (20) in the crossover region of the sail wheel (12).

3. Woltmann's sail wheel in accordance with one of the above Claims, **characterised in that** the halves (19.1, 19.2) are joined together at their lower ends by means of socket connections, and the flange half (21.2) can be engaged into the flange half (21.1).

## Revendications

1. Moulinet de Woltmann avec un insert de mesure (9) fixé sur la bride (5) du couvercle du boîtier de compteur (1), insert de mesure qui comprend une roue hélice (12) logée rotative entre un moyeu disposé en amont (10) et un moyeu disposé en aval (11), les deux moyeux (10, 11) étant maintenus immobiles et présentant des endroits de logement pour la roue hélice, **caractérisé en ce que** chaque moyeu (10, 11) est maintenu sur une seule entretoise (19), les deux entretoises (19) étant alignées dans le sens de courant, et se transforment à leur extrémité supérieure en une bride (21), qui peut être insérée, par assemblage par forme, dans une coulisse d'insertion (8) de la bride (5) du couvercle du boîtier de compteur (1) et **en ce que** cet arrangement possède un plan de joint commun de manière que deux moitiés de bride, d'entretoise et de moyeu (21.1, 19.1, 10.1, 11.1 et 21.2, 19.2, 10.2, 11.2) soient contiguës sur ce plan de joint, de manière amovible, et puissent être détachées l'une de l'autre pour le montage et le démontage de la roue hélice (12) et des paliers (13,14) de la roue hélice.

2. Moulinet de Woltmann suivant la revendication 1, **caractérisé en ce que** les entretoises, en formant une entretoise (19) d'un seul tenant, composée des deux moitiés d'entretoise (19.1, 19.2), se confondent à leurs extrémités supérieures et inférieures et que cette entretoise (19) présente une découpe (20) dans la zone de passage de la roue hélice (12).

3. Moulinet de Woltmann suivant une des revendications précédentes, **caractérisé en ce que** les moitiés d'entretoise (19.1, 19.2) sont, à leurs extrémités inférieures, reliées l'une à l'autre, de manière amovible au moyen d'un assemblage enfichable (25, 23) et **en ce que** la moitié de bride (21.2) peut s'enclencher dans la moitié de bride (21.1).
